# EUROPÄISCHE PATENTSCHRIFT

(11) **EP 1 049 952 B1**
(45) Veröffentlichungstag und Bekanntmachung des Hinweises auf die Patenterteilung: **26.11.2008**
(21) Anmeldenummer: 99960812.8
(22) Anmeldetag: 25.10.1999
(51) Int. Cl.: G02B 26/10, G02B 21/00

(54) **ANORDNUNG ZUR OPTISCHEN ABTASTUNG EINES OBJEKTS**
ARRANGEMENT FOR OPTICALLY SCANNING AN OBJECT
SYSTEME DE BALAYAGE OPTIQUE D'UN OBJET

(30) Priorität: 24.10.1998 DE 19849143; 19.10.1999 DE 19950225
(43) Veröffentlichungstag der Anmeldung: 08.11.2000
(73) Patentinhaber: Leica Microsystems CMS GmbH, 35578 Wetzlar (DE)
(72) Erfinder: ENGELHARDT, Johann,Dr., D-76669 Bad Schönborn (DE)
(74) Vertreter: Stamer, Harald
(86) Internationale Anmeldenummer: PCT/DE1999/003400
(87) Internationale Veröffentlichungsnummer: WO 2000/025171

(56) Entgegenhaltungen:
- US-A- 5 144 477
- US-A- 5 532 873
- PATENT ABSTRACTS OF JAPAN vol. 008, no. 202 (P-300), 14. September 1984 (1984-09-14) & JP 59 086024 A (MITSUBISHI DENKI KK), 18. Mai 1984 (1984-05-18)
- PATENT ABSTRACTS OF JAPAN vol. 006, no. 168 (P-139), 2. September 1982 (1982-09-02) & JP 57 085176 A (NIPPON ELECTRIC IND CO LTD), 27. Mai 1982 (1982-05-27)
- KENSINGTON LABS 8500 SERIES PRECISION STAGE, [Online] XP002132641 Retrieved from the Internet: <URL:http://www.kensingtonlabs.com/product s/8500stag> [retrieved on 2000-03-09]

## Beschreibung

Die Erfindung betrifft ein Laserscan-Mikroskop, vorzugsweise ein konfokales Laserscan-Mikroskop, mit einer Anordnung, zur optischen Abtastung eines Objekts gemäß dem Merkmalen des Oberbegriffs des Anspruchs 1.

Anordnung der gattungsbildenden Art werden insbesondere zur Detektion von "Micro-Array-Biochips" (MAB) eingesetzt. MAB finden in der medizinischen Diagnostik Verwendung, wo eine große Anzahl von MAB in kurzer Zeit zu untersuchen und auszuwerten sind. Als MAB können Objektträgger verwendet werden, bei denen eine große Anzahl von spezifischen Nachweisregionen (Spots) vorzugweise gitterförmig aufgebracht sind. Diese Nachweisregionen haben meist einen Durchmesser von etwa 50 bis 100 µm und sind hinsichtlich ihrer Fluoreszenzeigenschaften zu untersuchen. Die Spots sind auf einem Objektträgger auf einem Objektfeld von bis zu 22 x 60 mm verteilt.

Mit einem herkömmlichen konfokalen Laserscanmikroskop (CLSM) können jedoch Objekte, die auf so großen Objektfeldem verteilt sind nicht auf einmal abgebildet werden, da die Objektfelder der für solche Anwendungen in Frage kommenden Mikroskopobjektive hierfür zu klein sind. Eine Verwendung größerer Objektive bzw. Linsen bei bewegtem Strahl relativ zu den Linsen führt zu Bildunebenheiten und Intensitätsschwankungen. Hierbei werden die Bildunebenheiten durch Rest- bzw. Abbildungsfehler der verwendeten Linsen und Intensitätsschwankungen durch partielle Verschmutzung der optischen Komponenten im Strahlengang hervorgerufen.

Weiterhin ist der Beleuchtungsstrahlengang der CLSM's derart konfiguriert, dass der beugungsbegrenzte Scanstrahl in der Objektebene im Allgemeinen einen Durchmesser im Bereich von 1 - 2 µm aufweist. Die Objekte werden hierdurch mit einer für diese Anwendungen unnötigen und viel zu hohen Ortsauflösung abgetastet. Auch ist im Laborbetrieb ein hoher Durchsatz von zu untersuchenden Objektträgern gefordert, was mit den bislang bekannten CLSM's nicht erreicht werden kann.

Aus der DE 26 40 282 A1 ist für sich gesehen eine Anordnung zur optischen Abtastung eines Objekts bekannt, bei der ein Scanspiegel um zwei Achsen drehbar gelagert ist, wobei eine der beiden Drehachsen mit der optischen Achse des einfallenden Lichtstrahls zusammenfällt.

Im Patent Abstracts of Japan Bd. 006, Nr. 168 (P-139), 2. September 1982 (1982-09-02) & JP 57 085176 A (Nippon Electric IND CO LTD), 27. Mai 1982 (1982-05-27) ist eine optische Leseeinrichtung offenbart. Durch die Vorrichtung wird eine vorgegeben Fläche innerhalb einer vorgegebenen Zeit abgescannt. Dabei wird z. B. ein auf Lebensmitteln usw. Barcode gelesen, wobei das Lesen des Barcodes mit einer minimalen Anzahl von Reflektoren durchgeführt wird. Diese optische Leseeinrichtung offenbart jedoch keine Anordnung zum Scannen, die bei Laserscann-Mikroskopen eine Verwendung finden könnte.

Das U.S.-Patent 5,532,873 offenbart ein Laserscan-Mikroskop mit der eine Abbildung einer Probe innerhalb eines großen Intervalls der Vergrößerungen möglich ist. Mit der hier beschriebenen Vorrichtung soll ein kleiner Bereich der Probe abgebildet werden, wobei die Abbildung hoch auflösend sein soll. Ferner soll es mit der hier beschriebenen Vorrichtung möglich sein, einen großen Bereich der Probe mit einer niedrigen Auflösung abzubilden. Eine kostengünstige Anordnung der Scanneinrichtung nach dem die Abbildung durchführenden Mikroskopobjektiv ist in dem Dokument nicht vorgesehen.

Der vorliegenden Erfindung liegt daher die Aufgabe zugrunde, eine Anordnung zur optischen Abtastung von Objekten anzugeben, mit der ein Objektfeld abtastbar ist, das die Objektfeldgröße der Mikroskopoptik überschreitet. Darüber hinaus soll mit der Anordnung eine hinreichend schnelle Datenaufnahme unter Verwendung einfacher optischer Komponenten möglich sein.

Die voranstehende Aufgabe wird durch die Merkmale des Patentanspruches 1 gelöst. Danach ist eine Anordnung zur optischen Abtastung eines Objekts, Verbindung unit einem vorzugsweise konfokalen, Laserscan-Mikroskopie, dadurch gekennzeichnet, dass der Scanspiegel im Beleuchtungsstrahlengung dem Objektiv nachgeordnet ist, und dass mindesterns ein weiteren Spiegel dem Objektiv nachgeordnet ist.

Erfindungsgemäß ist zunächst erkannt worden, dass MAB bzw. Objektträger der herkömmlichen Größe mit einer relativ schwach vergrößernden Optik einfach und schnell mit Hilfe einer Scaneinrichtung abtastbar sind. Hierbei beinhaltet die Scanvorrichtung die drehbar angeordneten optischen Komponenten, mindestens jedoch einen im Beleuchtungs-/Detektionsstrahlengang angeordneten Scanspiegel. Der Spiegel ist derart im Beleuchtungs-/Detektionsstrahlengang angeordnet, dass ein Objekt durch Drehen bzw. Schwenken um eine zur Abtastfläche des Objekts zumindest weitgehend orthogonale Drehachse abgetastet werden kann. Durch die erfindungsgemäße Ausrichtung der Drehachse des Spiegels wird gewährleistet, dass mit der Scanvorrichtung eine ebene Abtastfläche des Objekts abtastbar ist.

In einer konkreten Ausführungsform fällt die Drehachse des Spiegels zumindest weitgehend mit der optischen Achse des Objektivs zusammen. Hierdurch kann in vorteilhafter Weise ein kleiner Scanspiegel eingesetzt werden, da der auf den Scanspiegel auftreffende Lichtstrahl - unabhängig von der momentanen Drehstellung des Scanspiegels - immer auf den gleichen zentralen Einfallspunkt auftrifft. Ein kleiner Scanspiegel weist außerdem eine geringere Masse auf, was eine hohe Scanfrequenz ermöglicht. Durch die besondere Anordnung der Drehachse des Spiegels und der optischen Achse können insbesondere Verzeichnungs- bzw. Verzerrungsartefakte minimiert werden, was einen zusätzlichen Vorteil der erfindungsgemäßen Anordnung darstellt. In einer alternativen Anordnung ist die Drehachse des Spiegels zumindest weitestgehend parallel zu der optischen Achse des Objektivs.

In einer weiteren Ausführungsform ist im Beleuchtungsstrahlengang dem Objektiv der Spiegel nachgeordnet. Hierbei ist lediglich der Spiegel drehbar bzw. schwenkbar angeordnet; das Objektiv ist ortsfest angeordnet. Der Arbeitsabstand des Objektivs muss derart gewählt werden, dass eine Beleuchtung bzw. Abbildung des Objekts nach einer Reflexion an dem Spiegel möglich ist. Falls der Arbeitsabstand des Objektivs vorgegeben ist, muss der drehbar bzw. schwenkbare Spiegel entsprechend angeordnet sein.

Im Beleuchtungsstrahlengang sind dem Objektiv mindestens zwei Spiegel nachgeordnet. Diese beiden Spiegel sind in einer Halterung aufgenommen und gemeinsam - durch Drehung der Halterung - drehbar bzw. schwenkbar.

Die Halterung dreht bzw. schwenkt um eine Drehachse, die zur Abtastfläche des Objekts zumindest weitgehend orthogonal ist. Hierdurch wird gewährleistet, dass mit der von der Halterung aufgenommenen Scanningeinheit eine ebene Abtastfläche des Objekts abtastbar ist. Zur konkreten Realisierung einer solchen Anordnung wird es im Allgemeinen erforderlich sein, dass die Drehachse der Halterung derart angeordnet ist, dass sie zumindest weitgehend parallel zur optischen Achse des Abbildungsstrahlengangs vor der Halterung ist. Gegebenenfalls ist die Position der Drehachse der Halterung an die von der Halterung aufgenommenen Spiegel bzw. Objektiv anzupassen. Um eine möglichst hohe Dreh- bzw. Schwenkfrequenz der Halterung zu erzielen, ist die Halterung möglichst massearm aus Material geringer Dichte angefertigt.

Die beiden im Strahlengang angeordneten Scanspiegel könnten parallel zueinander angeordnet sein. In diesem Fall weist der von den beiden Spiegeln reflektierte Lichtstrahl gegenüber dem auf die beiden Spiegel zulaufende Lichtstrahl einen lateralen bzw. seitlichen Versatz auf. In einer alternativen Ausführungsform sind die beiden Spiegel nicht parallel zueinander angeordnet, daher ist die optische Achse des von den beiden Spiegeln reflektierten Lichtstrahls nicht mehr parallel zu der optischen Achse des Lichtstrahls, der auf den beiden Spiegel zuläuft. Dennoch hat der von den beiden Spiegeln reflektierte Lichtstrahl im allgemeinen einen lateralen bzw. seitlichen Versatz zu dem ursprünglich auf die beiden Spiegel zulaufenden Lichtstrahl. Durch die Anordnung der Spiegel ist die Scan-Geometrie festgelegt sowie die Position des Objektträgers weitgehend vorgegeben.

In einer weiteren Ausführungsform weist die optische Achse des Beleuchtungsstrahlengangs vor der Scanningeinheit einen Winkel zur Drehachse der Scanningeinheit auf, der von 0 Grad verschieden ist. Hierbei könnte die Scanningeinheinheit zwei Spiegel oder zwei Spiegel und ein Objektiv aufweisen. Durch die Strahlführung der Scanningeinheit kann der durch die Scanningeinheit abgelenkte Lichtstrahl einen Einfallswinkel zur Abtastfläche des Objekts aufweisen, der von 0 Grad verschieden ist.

Vorzugsweise durch entsprechende Anordnung mindestens eines Spiegels kann der Einfallswinkel zwischen der optischen Achse des Strahlengangs und der Abtastfläche des Objekts derart eingestellt werden, dass er von 0 Grad verschieden ist. Hierdurch ist es in vorteilhafter Weise möglich, den Haupt-Rückreflex des Anregungslichts, der vom Übergang Objektträger-Luft herrührt zu unterdrücken bzw. aus dem Anregungs- und Detektionstrahlengang auszublenden. Dies ist insbesondere deshalb von großer Bedeutung, da nun ein (Bandpass)-Sperrfilter geringerer Stärke eingesetzt werden kann, der die Leistung des zu detektierenden Fluoreszenzlichts nur unwesentlich herabsetzt. Die Ausblendung des Haupt-Rückreflexes ist insbesondere dann vorteilhaft, wenn zur Beleuchtung Laser eingesetzt werden, denn das zum Laser zurücklaufende Anregungslicht stört im Allgemeinen dessen stimulierte Emission, was zu unerwünschten Intensitätsschwankungen des Laserlichts führen kann. Weiterhin können Reflexionen an Objektträgerkanten vermieden werden, die zu störenden Interferenzen im Objektbereich und damit ebenfalls zu Artefakten bei der Bildaufnahme führen würden.

Der Winkel zwischen der optischen Achse des Strahlengangs vor der Scanningeinheit und der Drehachse der Scanningeinheit oder der Einfallswinkel zwischen der optischen Achse des Strahlengangs und der Abtastfläche des Objekts ist größer als 0 Grad und kleiner als 20 Grad. In vorteilhafter Weise kann zur Minimierung des Haupt-Rückreflexes des Anregungslichts der Winkel derart gewählt werden, dass er dem Brewster-Winkel des Übergangs Objektträger-Luft entspricht, da dann die Intensität des reflektierten Lichtstrahls nahezu 0 ist. Hierzu muss allerdings der einfallende Lichtstrahl linear polarisiert sein, was durch die Verwendung von Laserlichtquellen im Allgemeinen gegeben ist.

Der/die Objektträger werden mit Hilfe einer Transportvorrichtung entlang einer Richtung bewegt. Hierdurch wird der Objektträger während der Abtastung der Scanningeinheit entlang dieser Richtung abgetastet. Die Transportvorrichtung weist eine axiale Positionierungsgenauigkeit des Objektträgers von kleiner gleich 10 µm auf. Hierdurch kann in vorteilhafter Weise auf eine Autofokussierung der Objekte bzw. des Objektträgers verzichtet werden, vorausgesetzt, dass die verwendete Optik einen entsprechend großen Tiefenschärfenbereich aufweist.

In einer konkreten Ausführungsform dienen mehrere Lichtstrahlen zur Beleuchtung der Objekte. Diese könnten durch eine der Lichtquelle nachgeordnete Anordnung, bestehend aus Spiegel und teildurchlässigen Glasplatten, erzeugt werden, so dass zur weiteren Beschleunigung des Abtastvorgangs ein Objektträger gleichzeitig mit mehreren Lichtstrahlen beleuchtet wird. Diese Lichtstrahlen könnten sowohl einen lateralen Versatz zueinander als auch einen unterschiedlichen Einfallswinkel zur Abtastfläche des Objekts aufweisen. In gleicher Weise dienen mehrere Lichtstrahlen zur Detektion. Weiterhin ist es denkbar, dass als Lichtquelle mehrere Laser gleichzeitig eingesetzt werden. Der/die Laser könnten ihrerseits auch jeweils verschiedene Wellenlängen emittieren. Zur Detektion könnten mehrere Detektoren gleichzeitig verwendet werden, so dass im Idealfall jedem der verwendeten Beleuchtungsstrahlen bzw. Detektionsstrahlen genau ein Detektor zugeordnet ist.

In weiter vorteilhafter Weise wird zur Beleuchtung der zu scannenden Objekte nur ein Teil der Objektivapertur genutzt. Der so von dem Objektiv fokussierte Beleuchtungsstrahl weist aufgrund fundamentaler optischer Zusammenhänge einen größeren Tiefenschärfenbereich auf, verglichen zu einem Beleuchtungsstrahl, der die gesamte Objektivapertur nutzt. Das wirkt sich vorteilhaft auf die axiale Positionierungsgenauigkeit der Transportvorrichtung aus, da diese mit dem Tiefenschärfenbereich der verwendeten Optik direkt zusammenhängt. Quer zur optischen Achse ist dann jedoch keine beugungsbegrenzte Fokussierung gegeben; sie ist für die hier in Rede stehende Anwendung im Allgemeinen auch nicht notwendig. Die teilweise Ausnutzung der Beleuchtungs-Objektivapertur realisiert hinsichtlich des Detektionsstrahlengangs eine Art "Dunkelfeldbeleuchtung", so dass der Einfallswinkel zwischen der optischen Achse des Beleuchtungsstrahlengangs und der Abtastfläche des Objekts von 0 Grad verschieden ist. Auch hierdurch werden unerwünschte Haupt-Rückreflexe und Interferenzerscheinungen minimiert.

Zur Dunkelfeldbeleuchtung wird das Anregungslicht über einen Spiegel in den Strahlengang eingekoppelt. Dieser Spiegel kann entsprechend der zur Beleuchtung vorgesehen Apertur relativ klein ausgestaltet sein, im Allgemeinen betragen die Ausmaße dieses Spiegels nur ein Bruchteil der Apertur des Objektivs.

In einer konkreten Ausführungsform wird der Hauptreflex des Anregungslichts über einen Spiegel zu einem Fokuspositionsdetektor geleitet. Dieser Spiegel kann ebenfalls kleine Ausmaße aufweisen, wenn der aus dem Hauptreflex resultierende Durchmesser des Lichtstrahls einen entsprechend kleinen Querschnitt aufweist. Durch das Einbringen des Ein- bzw. des Auskoppelspiegels reduziert sich die Detektionsapertur nur um einen Bruchteil der insgesamt nutzbaren Apertur des Objektivs. Der Fokuspositionsdetektor könnte aus einer zwei- oder viergeteilten Photodiode bestehen, so dass mit Hilfe der Daten des Fokuspositionsdetektors eine Auto-Fokussierung des Objektträgers durchführbar ist. Wenn der Tiefenschärfenbereich bezüglich der Beleuchtung/Detektion kleiner als die Positionierungsgenauigkeit der Transportvorrichtung ist, ist zur Abtastung des Objekts eine Auto-Fokussierung des Objektträgers während der Datenaufnahme notwendig. Hierdurch wäre sichergestellt, dass die abzutastenden, auf dem Objektträger befindlichen Objekte während der Datenaufnahme stets im Tiefenschärfenbereich des Anregungs- bzw. Detektionsstrahlengangs liegen und auch tatsächlich detektiert werden. Eine Auto-Fokussierung könnte entweder durch eine axiale Positionierung des Objektivs oder durch eine axiale Positionierung des Objektträgers, beispielsweise über die Transportvorrichtung, realisiert werden.

In Abhängigkeit von dem Durchmesser der zu detektierenden Objekte werden die im Strahlengang verwendeten optischen Komponenten derart zusammengestellt, dass der Beleuchungsdurchmesser des Laserstrahls bzw. der Laserstrahlen in der Objektebene einen Durchmesser aufweist, der größer als 1 µm und kleiner als 300 µm ist. Durch geeignete Wahl des Beleuchtungsdurchmessers in der Objektebene kann mit einer für die Identifizierung und Quantifizierung der Objekte optimalen Ortsauflösung abgetastet werden. Abhängig vom Abstand benachbarter Spots und deren Durchmesser kann ein Beleuchtungsdurchmesser in der Objektebene gewählt werden, der das Abtasttheorem zur Detektion dieser Struktur erfüllt. Eine Verringerung der Ortsauflösung hat eine Verringerung der aufgenommen Daten zur Folge, so dass der Aufnahmevorgang hierdurch darüber hinaus in vorteilhafter Weise zusätzlich zeitlich verkürzt werden kann.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche, andererseits auf die nachfolgende Erläuterung von Ausführungsbeispielen der Erfindung anhand der Zeichnungen zu verweisen. In Verbindung mit der Erläuterung der bevorzugten Ausführungsbeispiele anhand der Zeichnungen werden auch im Allgemeinen bevorzugte Ausgestaltungen und Weiterbildungen der Lehre erläutert. In den Zeichnungen zeigt
- Fig. 1: in einer schematischen Darstellung ein erstes Ausführungsbeispiel einer erfindungsgemäßen Anordnung zur optischen Abtastung eines Objekts,
- Fig. 2: in einer schematischen Darstellung ein alternatives Beispiel mit einer Anordnung zur optischen Abtastung eines Objekts, die lediglich einen Scanspiegel aufweist,
- Fig. 3: in einer schematischen Darstellung eine erfindungsgemäße Anordnung zur optischen Abtastung eines Objekts mit einer Halterung der beiden Spiegel,
- Fig. 4: in einer schematischen Darstellung eine Ansicht einer erfindungsgemäßen Anordnung zur optischen Abtastung eines Objekts mit einer Halterung der beiden Spiegel,
- Fig. 5: in einer schematischen Darstellung eines alternativbeispiels mit einer Anordnung zur optischen Abtastung eines Objekts, bei der im Beleuchungsstrahlengang die Linse bzw. das Objektiv den beiden Spiegeln nachgeordnet ist,
- Fig. 6: in einer schematischen Darstellung eine alternative Anordnung, die ebenfalls micht teil der Erfindung ist zur optischen Abtastung eines Objekts, bei der die Linse bzw. das Objektiv zwischen den beiden Spiegeln angeordnet ist,
- Fig. 7: in einer schematischen Darstellung eine alternative erfindungsgemäße Anordnung zur optischen Abtastung eines Objekts, bei der die beiden Spiegel nicht parallel zueinander angeordnet sind,
- Fig. 8: ein von einer Anordnung zur optischen Abtastung eines Objekts erzeugtes Abtastmuster,
- Fig. 9: in einer schematischen Darstellung eine Anordnung zur optischen Abtastung eines Objekts, bei der eine Dunkelfeldbeleuchtung realisiert ist,
- Fig. 10: in einer schematischen Darstellung eine Anordnung zur optischen Abtastung eines Objekts, bei der eine Dunkelfeldbeleuchtung in Verbindung mit einer Fokuspositionsdetektionseinrichtung realisiert ist,
- Fig. 11: in einer schematischen Darstellung den Querschnitt des Detektionsstrahlengangs aus Fig. 10.

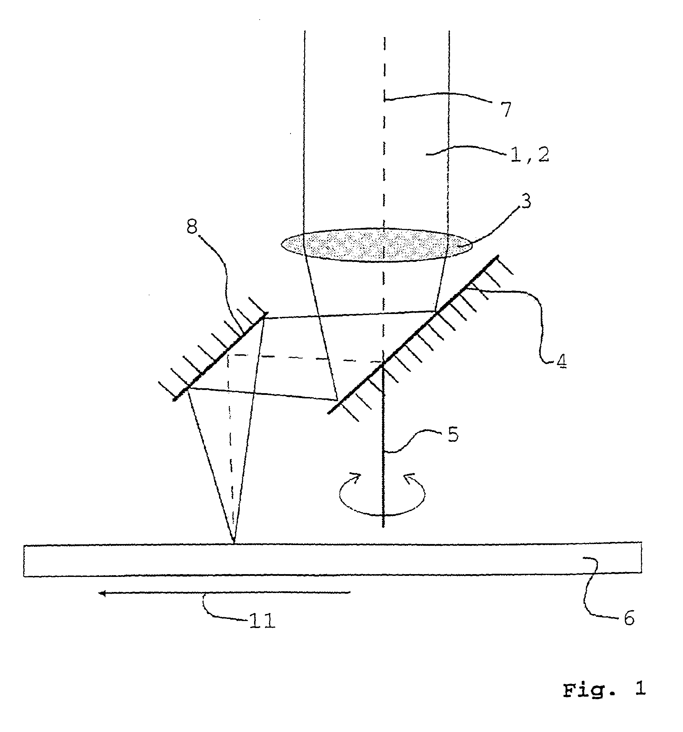

Die Figuren 1, 2, 3, 5, 6, 7, 9 und 10 zeigen jeweils eine Anordnung zur optischen Abtastung eines Objekts in der konfokalen Lasercan-Mikroskopie. Im Beleuchtungs-/Detektionsstrahlengang 1, 2 ist eine Linse oder ein Objektiv 3 und mindestens ein Scanspiegel 4 angeordnet. Der Scanspiegel 4 dreht bzw. schwenkt mit einer zur Abtastfläche des Objekts zumindest weitgehend orthogonalen Drehachse 5. Das Objekt befindet sich auf dem Objektträger 6. Gemäß der in den Fig. 1, 3, 5, 6, 7, 9 und 10 gewählten Darstellung fällt die Drehachse 5 des Spiegels 4 mit der optischen Achse der Linse bzw. des Objektivs von der Spiegelanordnung zusammen.

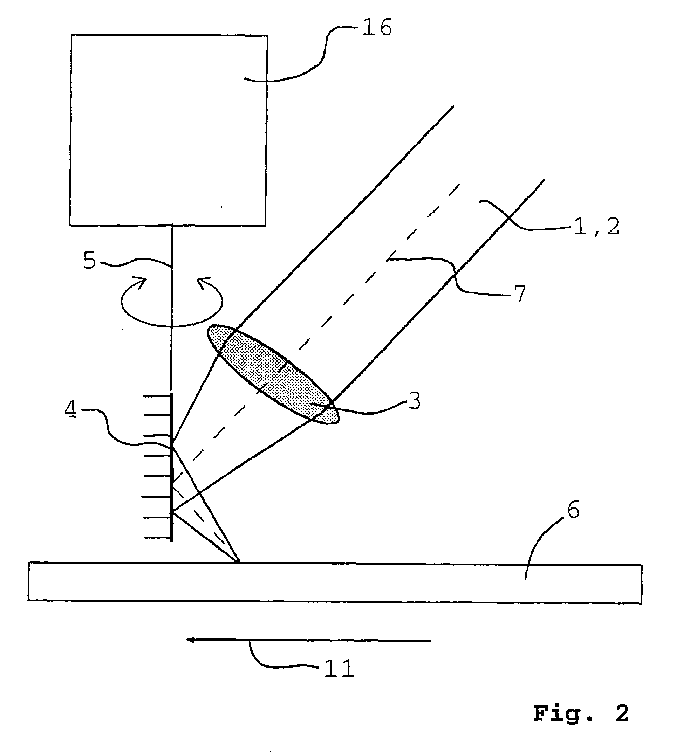

In Fig. 2 ist der Linse 3 der Spiegel 4 nachgeordnet, die Drehachse 5 des Spiegels 4 ist auch hier orthogonal zur Abtastfläche der auf dem Objektträger 6 befindlichen Objekte. Das Licht zur Beleuchtung der Objekte kommt von einer in Fig. 2 nicht gezeigten Lichtquelle und läuft kollimiert entlang der optischen Achse 7 zur Linse 3, die den Beleuchtungsstrahl fokussiert. Der konvergent verlaufende Beleuchtungsstrahl trifft auf den Scanspiegel 4, nach dessen Reflexion trifft das Beleuchtungslicht auf den Objektträger 6. Das durch das Beleuchtungslicht angeregte Fluoreszenzlicht durchläuft den Weg des Beleuchtungsstrahlengangs in umgekehrter Richtung und trifft auf einen in Fig. 2 nicht gezeigten Strahlteiler, der das Fluoreszenzlicht zu einem ebenfalls nicht gezeigten Detektor leitet.

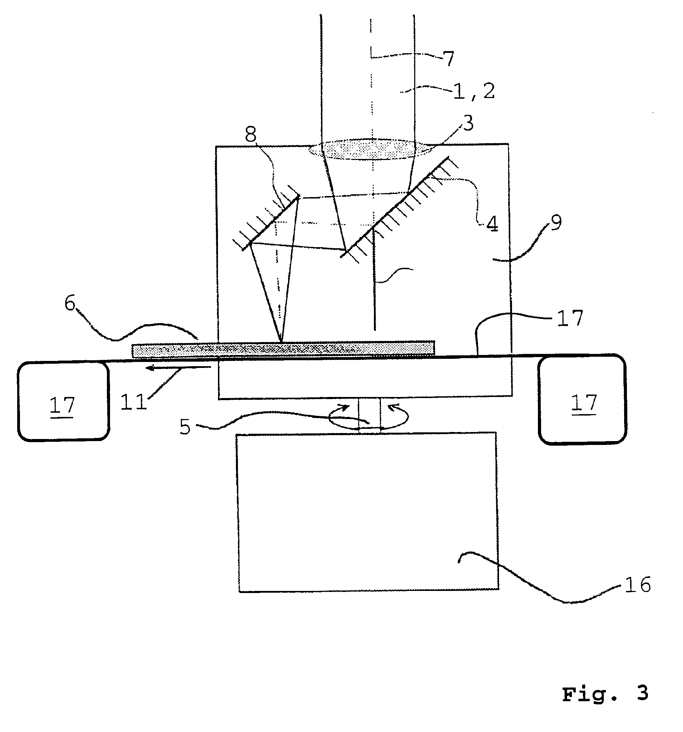

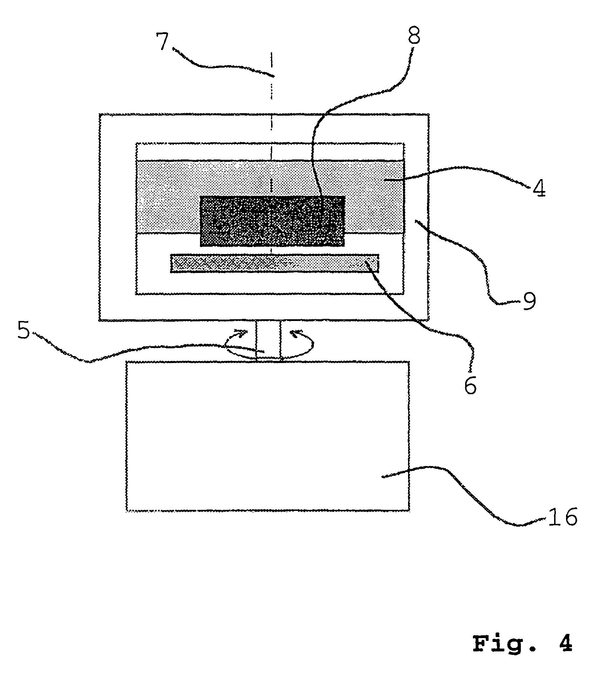

In den Figuren 1, 3, 7, 9 und 10 sind erfindungsgemäße Ausführungsformen einer Anordnung zur optischen Abtastung eines Objekts dargestellt, bei der im Beleuchtungsstrahlengang dem Objektiv 3 mindestens zwei Spiegel 4, 8 nachgeordnet sind. In den Fig. 3 und 4 ist angedeutet, dass die beiden Spiegel 4, 8 hierbei in einer gemeinsamen Halterung 9 aufgenommen sind.

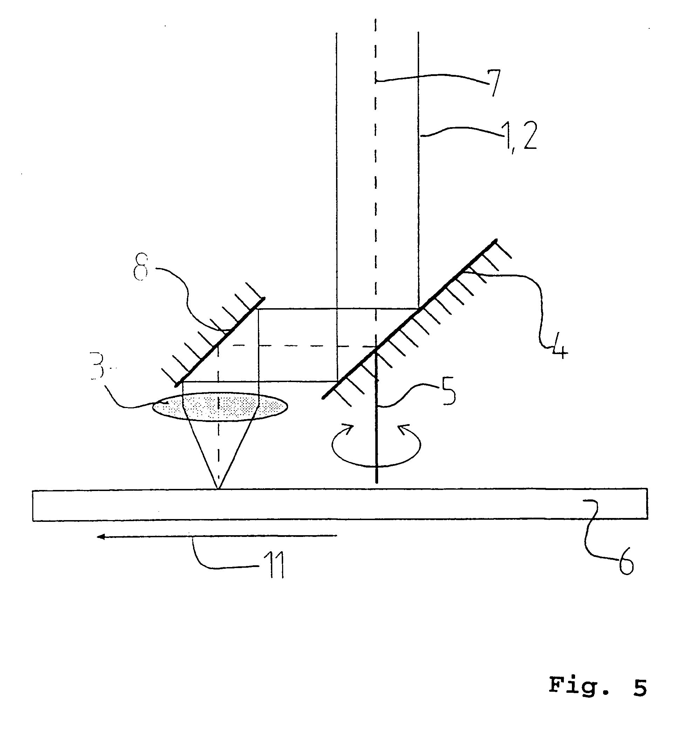

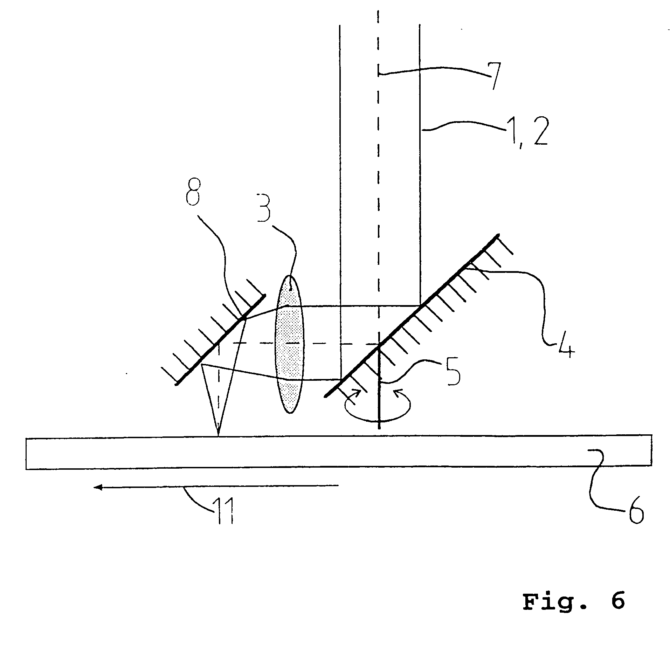

In Fig. 5 ist ein Alternativ beispiel dargestellt, beiden den beiden Spiegeln 4, 8 die Linse 3 nachgeordnet ist. In einem weiteren alternativen Beispiel gemäß Fig. 6 ist die Linse 3 zwischen den beiden Spiegeln 4, 8 angeordnet. Der Spiegel 4, 8 und die Linse 3 aus den Fig. 5 und 6 sind in einer gemeinsamen Halterung aufgenommen. Wie in den Fig. 3 und 4 angedeutet, schwenkt bzw. dreht die Halterung 9 mit einer zur Abtastfläche des Objekts orthogonalen Drehachse 5, und fällt mit der optischen Achse des Abbildungsstrahlengangs vor der Halterung zusammen. Die Halterung 9 ist aus Material geringer Dichte, nämlich Aluminium in Leichtbauweise, angefertigt.

Den Ausführungsformen gemäß den Fig. 1, 3, 9 und 10 kann entnommen werden, dass die beiden Spiegel 4, 8 parallel zueinander angeordnet sind. Der orthogonal zur Abtastfläche des Objekts verlaufende Beleuchtungsstrahlengang mit der optischen Achse 7 trifft in diesen Ausführungsformen nach Durchlaufen der aus den beiden Spiegeln 4, 8 bestehenden Scanningeinheit orthogonal auf die Abtastfläche der Objekte auf.

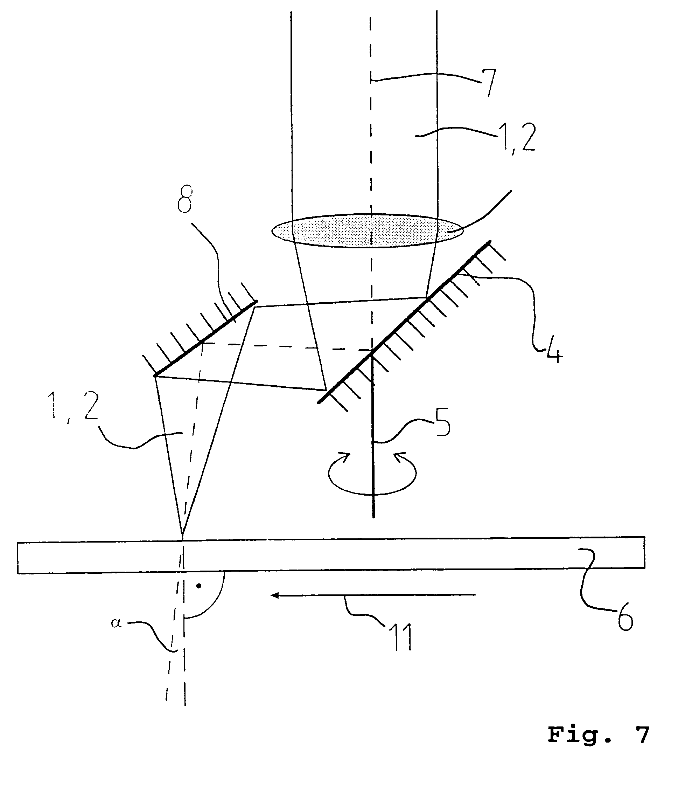

In der Ausführungsform gemäß Fig. 7 sind die beiden Spiegel 4, 8 nicht parallel zueinander angeordnet. Der zunächst orthogonal zur Abtastfläche des Objekts verlaufende Beleuchtungsstrahlengang mit der optischen Achse 7 wird nach Durchlaufen der Linse und der aus den Spiegeln 4, 8 bestehenden Scanningeinheit derart abgelenkt, dass die optische Achse des nunmehr abgelenkten Beleuchtungsstrahlengangs nicht mehr orthogonal, sondern unter dem Winkel α, zur Flächennormale auf die Abtastfläche des Objekts auftrifft.

Der Dastellung gemäß Fig. 2 kann entnommen werden, dass im Beleuchtungsstrahlengang die optische Achse des Strahlengangs vor der aus dem Spiegel 4 bestehenden Scanningeinheit einen Winkel zur Drehachse 5 der Scanningeinheit aufweist, der von 0 Grad verschieden ist. Auch hierdurch ist es möglich, dass der abgelenkte Beleuchtungsstrahl nicht orthogonal auf die Abtastfläche des Objekts auftrifft. In dieser Ausführungsform entspricht der Einfallswinkel zwischen der optischen Achse des Beleuchtungsstrahls nach der Ablenkung durch den Scanspiegel 4 und der Abtastfläche des Objekts dem Brewster-Winkel. Hierdurch wird der Haupt-Rückreflex des Anregungslichts aus dem Anregungs- bzw. Detektionsstrahlengang minimiert.

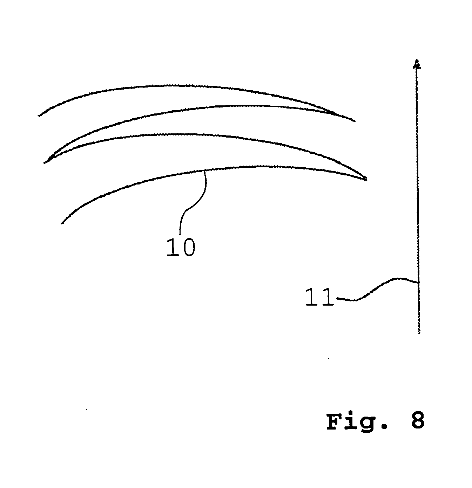

Der Objektträger 6 wird von einer - in den Figuren nicht gezeigten - Transportvorrichtung entlang einer Richtung 11 bewegt. Durch den Scanvorgang der Scanningeinheit und der Bewegung des Objektträgers entlang einer Richtung wird das in Fig. 8 dargestellte Abtastmuster 10 erzeugt, das sämtliche relevanten Bereiche des Objektträgers abtastet. Die Transportvorrichtung weist eine axiale Positionierungsgenauigkeit hinsichtlich der Fokusposition des Beleuchtungs- bzw. Detekionsstrahlengangs von 5 µm auf.

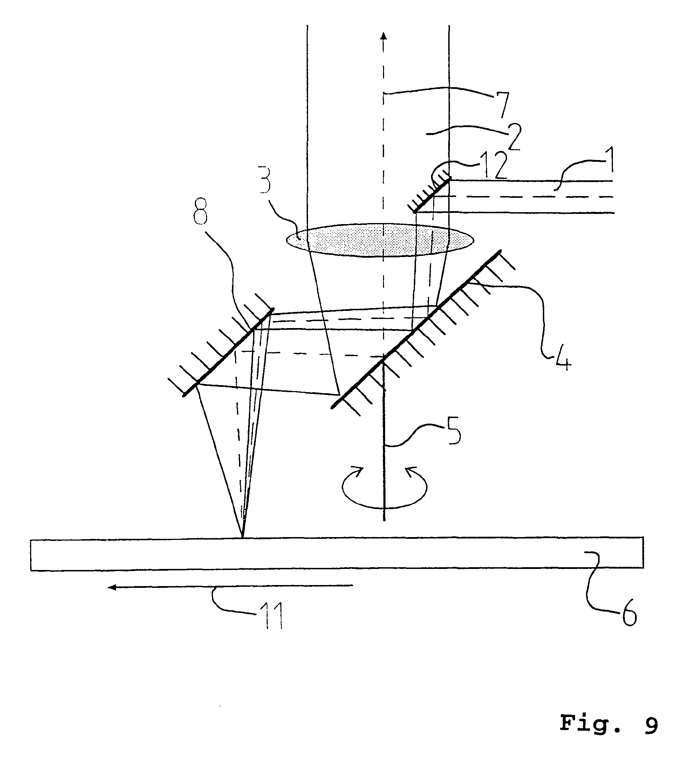

In der Ausführungsform aus Fig. 9 erfolgt die Beleuchtung der auf dem Objektträger befindlichen Objekte mit zwei Lichtstrahlen, nämlich mit dem Beleuchtungsstrahl 1 und 2. Als Lichtquelle für den Beleuchtungsstrahl 1 dient ein - in Fig. 9 nicht gezeigter - Argon-Krypton Laser, der Licht der Wellenlängen 488 nm und 568 nm emittiert. Die Lichtquelle des Beleuchtungsstrahls 2 ist ein in Fig. 9 ebenfalls nicht gezeigter Helium-Neon Laser, der Licht der Wellenlänge 633 nm emittiert. Die Fluoreszenzemission, die durch Beleuchtungslicht der drei unterschiedlichen Wellenlängen angeregt wird, wird mit drei in Fig. 9 ebenfalls nicht gezeigten Detektoren simultan detektiert.

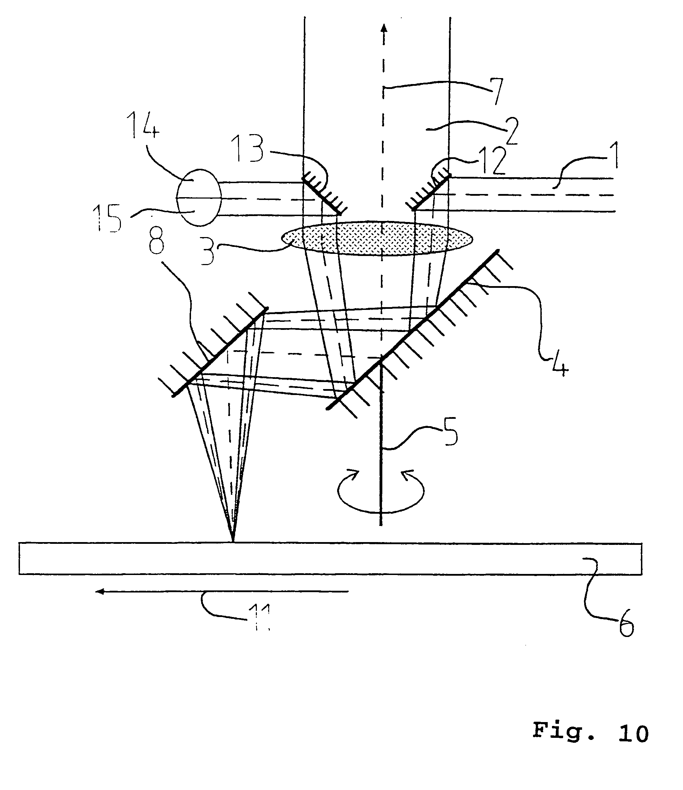

Den Fig. 9 und 10 ist entnehmbar, dass zur Beleuchtung der zu scannenden Objekte nur ein Teil der Objektivapertur genutzt wird. Der kollimierte Beleuchtungsstrahl 1, der verglichen zum Querschnitt des Detektionsstrahlengangs 2 einen geringeren Querschnitt aufweist, wird über einen Einkoppelspiegel 12 eingekoppelt. In den Ausführungsformen gemäß den Fig. 9 und 10 wird zur Detektion mit dem Detektionsstrahlengang 2 nahezu die gesamte Apertur des Objektivs 3 ausgenutzt; der Beleuchtunsstrahlengang 1 weist eine wesentlich kleinere Apertur auf.

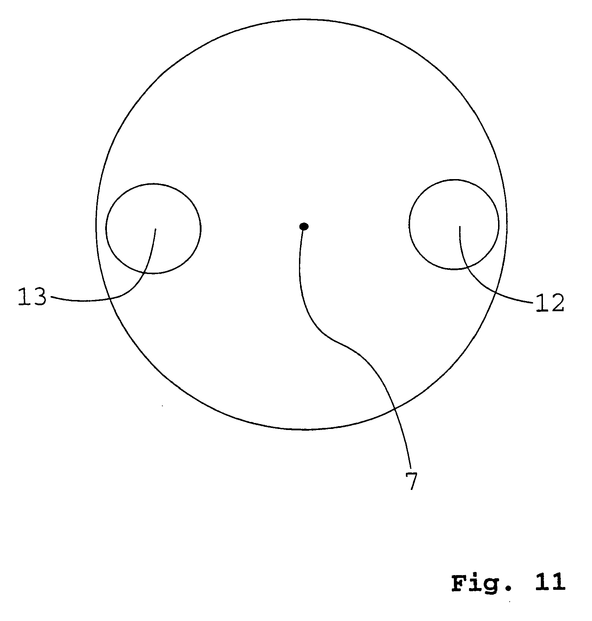

In Fig. 10 ist dargestellt, dass der Hauptreflex des Anregungslichts 1 über einen Auskoppelspiegel 13 zu einem Fokuspositionsdetektor 14, 15 geleitet wird. Einkoppelspiegel 12 und Auskoppelspiegel 13 sind im Detektionsstrahlengang 2 positioniert und reduzieren daher die insgesamt verfügbare Detektionsapertur des Objektivs 3 nur geringfügig. In Fig. 11 ist die Querschnittsfläche des Detektionsstrahlengangs 2 sowie die Querschnittsfläche der Ein- bzw. Auskoppelspiegel 12, 13 dargestellt. Die gesamte Detektionsapertur ist aufgrund der Anordnung der beiden Spiegel 12, 13 im Detektionsstrahlengang lediglich um etwa 8 % reduziert, was sich kaum auswirkt.

Der Hauptreflex des Anregungslichts 1 trifft auf den Fokuspositionsdetektor 14, 15, der aus einer zweigeteilten Photodiode besteht. Abhängig von der Fokusposition des Objektträgers 11 ist der eine oder der andere Teil des Fokuspositionsdektors 14, 15 vermehrt mit Licht beaufschlagt. Die Daten des Fokuspositionsdektors 14, 15 werden der Steuereinheit des Laserscanmikroskops zugeführt, die eine Autofokussierung des Objektträgers durchführt. Die Autofokussierung wird über Stellelemente der Transportvorrichtung realisiert, die ihrerseits Positionsgeber aufweisen, die mit der Steuereinheit des Laserscanmikroskops verbunden sind, in der die Soll- mit der Ist-Position der Stellelemente verglichen wird.

Der Beleuchtungsdurchmesser des Laserstrahls in der Objektebene weist einen Durchmesser von 50 µm auf. Hiermit können die Markierungsregionen, die einen Durchmesser von ca. 120 µm aufweisen, eindeutig identifiziert und lokalisiert und hinsichtlich ihrer Fluoreszenzemission mit einer hinreichenden Genauigkeit quantifiziert werden.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

### Bezugszeichenliste

- 1: Beleuchtungsstrahlengang
- 2: Detektionsstrahlengang
- 3: Objektiv
- 4: Scanspiegel
- 5: Drehachse
- 6: Objektträger
- 7: optische Achse des Objektivs
- 8: Spiegel
- 9: Halterung
- 10: Abtastmuster
- 11: Bewegungsrichtung der Transportvorrichtung
- 12: Einkoppelspiegel
- 13: Auskoppelspiegel
- 14: Fokuspositionsdetektor
- 15: Fokuspositionsdetektor
- 16: Galvanometer
- 17: Transportvorrichtung

## Patentansprüche

1. Laserscan-Mikroskop mit einem Objektiv zur Fokussierung des Laserlicht auf eine zu untersuchende probe und einer Anordnung zur optischen Abtastung eines Objekts, wobei das Laserscan-Mikroskop einen Beleuchtungs-/Detektionsstrahlengang (1,2) definiert, in dem das Objektiv (3) und mindestens ein Scan-Spiegel (4) angeordnet sind, wobei der Scan-Spiegel (4) um eine mit einer Abtastfläche des Mikroskope zumindest weitgehend orthogonalen Drehachse (5) dreht, bzw. schwenkt, **dadurch gekennzeichnet, dass** der Scan-Spiegel (4) im Beleuchtungsstrahlengang dem Objektiv (3) nachgeordnet ist, und dass mindestens ein weiterer Spiegel (8) dem Objektiv (3) nachgeordnet ist, so dass der von den beiden Spiegeln reflektierte Lichtstrahl gegenüber dem auf die beiden Spiegel zulaufenden Lichtstrahl einen lateralen bzw. seitlichen Versatz aufweist.

2. Mikroskop nach Anspruch 1, **dadurch gekennzeichnet, dass** die Drehachse (5) des Scan-Spiegel (4) zumindest weitgehend mit der optischen Achse (7) / des Objektivs (3) zusammenfällt.

3. Mikroskop nach Anspruch 1, **dadurch gekennzeichnet, dass** die Drehachse (5) des Scan-Spiegel (4) zumindest weitgehend parallel zu der optischen Achse (7) / des Objektivs (3) ist.

4. Mikroskop nach Anspruch 1, **dadurch gekennzeichnet, dass** der Scan-Spiegel (4) und der mindestens eine weitere Spiegel (8) von einer gemeinsamen Halterung (9) gehalten sind.

5. Mikroskop nach Anspruch 4, **dadurch gekennzeichnet, dass** die Halterung (9) mit einer zur Abtastfläche des Objekts zumindest weitgehend orthogonalen Drehachse (5) dreht, bzw. schwenkt.

6. Mikroskop nach Anspruch 4, **dadurch gekennzeichnet, dass** die Drehachse der Halterung (9) zumindest weitgehend parallel zur optischen Achse (7) des Abbildungsstrahlengangs vor der Halterung (9) angeordnet ist.

7. Mikroskop nach einem der Ansprüche 4 - 6, **dadurch gekennzeichnet, dass** die Halterung (9) aus Material geringer Masse/Dichte gefertigt ist.

8. Mikroskop nach Anspruch 1, **dadurch gekennzeichnet, dass** der (4) und der mindestens eine weitere Spiegel (8) parallel zueinander angeordnet sind.

9. Mikroskop nach Anspruch 1, **dadurch gekennzeichnet, dass** der (4) und der mindestens eine weitere Spiegel (8) nicht parallel zueinander angeordnet sind.

10. Mikroskop nach einem der Ansprüche 1 bis 9, **dadurch gekennzeichnet, dass** die optische Achse (7) des Beleuchtungsstrahlengangs vor dem (4) einen Winkel zur Drehachse (5) des (4) aufweist, der von 0 ° verschieden ist.

11. Mikroskop nach einem der Ansprüche 1 bis 10, **dadurch gekennzeichnet, dass** vorzugsweise durch entsprechende Anordnung des (4) oder des mindestens einen weiteren Spiegels (8) der Einfallswinkel zwischen der optischen Achse (7) des Strahlengangs und der Abtastfläche des Objekts von 0 ° verschieden ist.

12. Mikroskop nach Anspruch 10 oder 11, **dadurch gekennzeichnet, dass** der Winkel größer als 0 und kleiner als 20 ° ist.

13. Mikroskop nach Anspruch 10 oder 11, **dadurch gekennzeichnet, dass** der Winkel dem Brewster-Winkel entspricht.

14. Mikroskop nach einem der Ansprüche 1 bis 13, **dadurch gekennzeichnet, dass** eine Transportvorrichtung vorgesehen ist, die den/die Objektträger (6) entlang einer Richtung (11) bewegt.

15. Mikroskop nach einem der Ansprüche 1 bis 14, **dadurch gekennzeichnet, dass** ein Beleuchtungsdurchmesser des Laserstrahls, bzw. der Laserstrahlen in der Objektebene einen Durchmesser aufweist, der größer als 1 µm und kleiner als 300 µm ist.

16. Mikroskop nach einem der Ansprüche 1 bis 15, **dadurch gekennzeichnet, dass** es sich um ein konfokales Laser-Scan-Mikroskop handelt.

## Claims

1. Laser scanning microscope having an objective for focussing the laser light onto a sample to be tested, and an arrangement for optically scanning an object, the laser scanning microscope defining an illumination/detection beam path (1, 2) in which the objective (3) and at least one scanning mirror (4) are arranged, with the scanning mirror (4) rotating or pivoting about a rotation axis (5) which is at least largely orthogonal to a scanning surface of the microscope, **characterized in that** the scanning mirror (4) is arranged downstream of the objective (3) in the illumination beam path, and **in that** at least one further mirror (8) is arranged downstream of the objective (3) such that the light beam reflected by two mirrors is offset laterally or at the side from the light beam running up to the two mirrors.

2. Microscope according to Claim 1, **characterized in that** the rotation axis (5) of the scanning mirror (4) at least largely coincides with the optical axis (7) of the objective (3).

3. Microscope according to Claim 1, **characterized in that** the rotation axis (5) of the scanning mirror (4) is at least largely parallel to the optical axis (7) of the objective (3).

4. Microscope according to Claim 1, **characterized in that** the scanning mirror (4) and the at least one further mirror (8) are held by a common holder (9).

5. Microscope according to Claim 4, **characterized in that** the holder (9) rotates or pivots with the aid of a rotation axis (5) at least largely orthogonal to the scanning surface of the object.

6. Microscope according to Claim 4, **characterized in that** the rotation axis of the holder (9) is arranged at least largely parallel to the optical axis (7) of the imaging beam path upstream of the holder (9).

7. Microscope according to one of Claims 4-6, **characterized in that** the holder (9) is made from material of low mass/density.

8. Microscope according to Claim 1, **characterized in that** the scanning mirror (4) and the at least one further mirror (8) are arranged parallel to one another.

9. Microscope according to Claim 1, **characterized in that** the scanning mirror (4) and the at least one further mirror (8) are not arranged parallel to one another.

10. Microscope according one of Claims 1 to 9, **characterized in that** the optical axis (7) of the illumination beam path upstream of the scanning mirror (4) is at an angle to the rotation axis (5) of the scanning mirror (4) which differs from 0°.

11. Microscope according to one of Claims 1 to 10, **characterized in that** owing preferably to an appropriate arrangement of the scanning mirror (4) or of the at least one further mirror (8) the angle of incidence between the optical axis (7) of the beam path and the scanning surface of the object differs from 0°.

12. Microscope according to Claim 10 or 11, **characterized in that** the angle is greater than 0 and less than 20°.

13. Microscope according to Claim 10 or 11, **characterized in that** the angle corresponds to the Brewster angle.

14. Microscope according to one of Claims 1 to 13, **characterized in that** a transport apparatus is provided which moves the object carrier or object carriers (6) in a direction (11).

15. Microscope according to one of Claims 1 to 14, **characterized in that** an illumination diameter of the laser beam or laser beams has in the object plane a diameter which is greater than 1 µm and less than 300 µm.

16. Microscope according to one of Claims 1 to 15, **characterized in that** it is a confocal laser scanning microscope.

## Revendications

1. Microscope à balayage laser comprenant un objectif pour concentrer la lumière laser sur un échantillon à examiner et un arrangement de balayage optique d'un objet, le microscope à balayage laser définissant un trajet de rayon d'éclairage/de détection (1, 2), dans lequel sont disposés l'objectif (3) et au moins un miroir de balayage (4), le miroir de balayage (4) tournant ou pivotant autour d'un axe de rotation (5) au moins à quelques détails près orthogonal à la surface de balayage du microscope, **caractérisé en ce que** le miroir de balayage est disposé après l'objectif (3) dans le trajet du rayon d'éclairage et qu'au moins un miroir supplémentaire (8) est disposé après l'objectif (3) de sorte que le rayon lumineux réfléchi par les deux miroirs présente un décalage latéral ou transversal par rapport au rayon lumineux arrivant sur les deux miroirs.

2. Microscope selon la revendication 1, **caractérisé en ce que** l'axe de rotation (5) du miroir de balayage (4) coïncide au moins à quelques détails près avec l'axe optique (7) de l'objectif (3).

3. Microscope selon la revendication 1, **caractérisé en ce que** l'axe de rotation (5) du miroir de balayage (4) est au moins à quelques détails près parallèle à l'axe optique (7) de l'objectif (3).

4. Microscope selon la revendication 1, **caractérisé en ce que** le miroir de balayage (4) et l'au moins un miroir supplémentaire (8) sont maintenus par un support (9) commun .

5. Microscope selon la revendication 5, **caractérisé en ce que** le support (9) tourne ou pivote avec un axe de rotation (5) au moins à quelques détails près orthogonal à la surface de balayage de l'objet.

6. Microscope selon la revendication 4, **caractérisé en ce que** l'axe de rotation du support (9) est disposé au moins à quelques détails près parallèlement à l'axe optique (7) du trajet de rayon de représentation avant le support (9).

7. Microscope selon l'une des revendications 4 à 6, **caractérisé en ce que** le support (9) est fabriqué dans un matériau de faible masse/densité.

8. Microscope selon la revendication 1, **caractérisé en ce que** le miroir de balayage (4) et l'au moins un miroir supplémentaire (8) sont disposés parallèlement l'un à l'autre.

9. Microscope selon la revendication 1, **caractérisé en ce que** le miroir de balayage (4) et l'au moins un miroir supplémentaire (8) ne sont pas disposés parallèlement l'un à l'autre.

10. Microscope selon l'une des revendications 1 à 9, **caractérisé en ce que** l'axe optique (7) du trajet de rayon d'éclairage présente avant le miroir de balayage (4) un angle par rapport à l'axe de rotation (5) du miroir de balayage (4) qui est différent de 0°.

11. Microscope selon l'une des revendications 1 à 10, **caractérisé en ce que** l'angle d'incidence entre l'axe optique (7) du trajet de rayon et la surface de balayage de l'objet est différent de 0°, de préférence par une disposition en conséquence du miroir de balayage (4) ou de l'au moins un miroir supplémentaire (8).

12. Microscope selon la revendication 10 ou 11, **caractérisé en ce que** l'angle est supérieur à 0° et inférieur à 20°.

13. Microscope selon la revendication 10 ou 11, **caractérisé en ce que** l'angle correspond à l'angle de Brewster.

14. Microscope selon l'une des revendications 1 à 13, **caractérisé en ce qu'**il est prévu un dispositif de transport qui déplace le/les porte-objets (6) le long d'une direction (11).

15. Microscope selon l'une des revendications 1 à 14, **caractérisé en ce qu'**un diamètre d'éclairage du rayon laser ou des rayons laser dans le plan de l'objet présente un diamètre qui est supérieur à 1 µm et inférieur à 300 µm.

16. Microscope selon l'une des revendications 1 à 15, **caractérisé en ce qu'**il s'agit d'un microscope à balayage laser à foyer commun.
